# DEMANDE DE BREVET EUROPEEN

(11) **EP 4 772 422 A1**
(43) Date de publication de la demande: **08.07.2026**
(21) Numéro de dépôt: 25219707.4
(22) Date de dépôt: 01.12.2025
(51) Int. Cl.: B62D 25/04

(54) **VEHICULE AUTOMOBILE COMPRENANT UN PIED MILIEU COMPORTANT UNE ZONE DE RABOUTAGE POSITIONNEE AU-DESSUS D'UNE ZONE DE NON-RECOUVREMENT**

(30) Priorité: 07.01.2025 FR 2500112
(71) Demandeur: Stellantis Auto SAS, 78300 Poissy (FR)
(72) Inventeur: BESSETTE, DAMIEN, 25150 ECOT (FR); TROPEE, NICOLAS, 90000 BELFORT (FR); THOR, TOU, 25150 PONT DE ROIDE VERMONDANS (FR); MAGAS, MIHAELA MARIA, 90800 ARGIESANS (FR); MAURICE, SEBASTIEN, 25360 GONSANS (FR); BORNIER, PAUL, 70400 LUZE (FR)
(74) Mandataire: BCIP

(57) **Abrégé**

L'invention concerne un véhicule automobile comportant un pied milieu s'étendant selon la troisième direction (Z), un arceau de pavillon et un châssis comprenant un longeron, le pied milieu comportant un renfort (1) et une doublure, le renfort (1) comportant une partie supérieure (3), une partie centrale (4) et une partie inférieure (5), la partie supérieure (3) étant fixée à l'arceau de pavillon, la partie inférieure (5) étant fixée au longeron, la partie centrale (4) étant fixée à la partie supérieure (3) par une première zone de raboutage (6), la partie centrale (4) étant fixée à la partie inférieure (5) par une deuxième zone de raboutage (7), caractérisé en ce que la partie inférieure (5) comporte une zone de non-recouvrement par ladite doublure, la deuxième zone de raboutage (7) étant positionnée au-dessus de la zone de non-recouvrement selon la troisième direction (Z).

## Description

L'invention porte sur la structure des véhicules automobiles et les moyens de sécuriser les occupants du véhicule lors d'un choc latéral avec cette structure.

Il est connu de l'art antérieur la demande de brevet FR3142435 qui décrit un pied milieu pour véhicule automobile. Le pied milieu comporte une partie centrale et deux extrémités, à savoir une première extrémité et une deuxième extrémité, positionnée de part et d'autre de ladite partie centrale. La première extrémité est fixée à la partie centrale par une première zone de raboutage. La deuxième extrémité est fixée à la partie centrale par une deuxième zone de raboutage. La première extrémité est fixée à l'arceau de pavillon du véhicule, tandis que la deuxième extrémité est fixée sur un longeron du châssis du véhicule. Le pied milieu comporte un renfort et une doublure. En outre, ledit pied milieu comporte une ou deux structures de rigidification s'étendant sur la première extrémité et sur la partie centrale. Cependant, un inconvénient subsiste. La doublure ne s'étend pas jusqu'à la deuxième extrémité, ou extrémité inférieure. De la même façon, la ou les structures de rigidification ne s'étendent pas au niveau de la deuxième extrémité. L'extrémité inférieure est donc une zone de faiblesse. En outre, la deuxième zone de raboutage, étant également une zone de faiblesse, est localisée au niveau de la deuxième extrémité. Cela implique la superposition de deux zones de faiblesse, ce qui engendre un fort risque de plastification du pied milieu lors d'un choc latéral. Le pied milieu est alors susceptible de se déformer, voire se rompre, avant l'actionnement des dispositifs de protection corporelles des occupants, mettant ainsi en péril la sécurité des occupants du véhicule.

L'objectif de la présente invention est de remédier à ces inconvénients et de solidifier le pied milieu pour sécuriser davantage les occupants d'un véhicule en cas de choc latéral.

Pour atteindre cet objectif, l'invention propose un véhicule automobile comportant un train de roulement avant et un train de roulement arrière dont les points de contact avec le sol définissent un plan de base défini par une première direction longitudinale correspondant au roulage en ligne droite, par une deuxième direction transversale et orthogonale à la première direction longitudinale et une troisième direction verticale orthogonale à la première direction et à la deuxième direction et est orientée en s'éloignant du sol, ledit véhicule comportant un pied milieu s'étendant selon la troisième direction, un arceau de pavillon et un châssis comprenant un longeron, le pied milieu comportant un renfort positionné en regard de l'extérieur du véhicule et une doublure positionnée en regard de l'intérieur du véhicule selon la deuxième direction, le renfort comportant une partie supérieure, une partie centrale et une partie inférieure, la partie supérieure étant fixée à l'arceau de pavillon, la partie inférieure étant fixée au longeron, la partie centrale étant fixée à la partie supérieure par une première zone de raboutage, la partie centrale étant fixée à la partie inférieure par une deuxième zone de raboutage, remarquable en ce que la partie inférieure comporte une zone de non-recouvrement par ladite doublure, la deuxième zone de raboutage étant positionnée au-dessus de la zone de non-recouvrement selon la troisième direction.

Grâce à l'invention, le pied milieu est solidifié de façon à éviter sa déformation, voire sa rupture, lors d'un choc latéral. Les risques de dommages corporels des occupants du véhicule sont ainsi réduits.

Avantageusement, la partie inférieure présente une extrémité inférieure, ladite deuxième zone de raboutage étant positionnée à une distance comprise entre 400 mm et 500 mm de ladite extrémité inférieure.

De préférence, la distance est égale à 450 mm.

Ainsi, la deuxième zone de raboutage est localisée au-dessus de la zone de non-recouvrement, ce qui évite la superposition des zones de faiblesse. Le pied milieu est ainsi plus solide.

Avantageusement, ledit renfort présente une masse inférieure à 5,2 kg.

De préférence, la masse est comprise entre 4 kg et 4,5 kg.

De manière encore plus préférentielle, la masse est égale à 4,3 kg.

La masse du pied milieu est ainsi réduite par rapport à l'art antérieur, ce qui réduit la masse globale du véhicule. Le véhicule est ainsi plus performant et sa consommation énergétique est réduite.

Avantageusement, la partie inférieure présente une première épaisseur inférieure à 1,7 mm, la partie centrale présentant une deuxième épaisseur inférieure à 1,9 mm.

De préférence, la première épaisseur est égale à 1,5 mm et la deuxième épaisseur est égale à 1,5 mm.

Une telle épaisseur facilite l'agencement du pied milieu dans ledit véhicule. De plus, une réduction de l'épaisseur permet de réduire la masse du pied milieu, et par conséquent la masse globale du véhicule, de façon à améliorer les performances de ce dernier.

De préférence, la partie centrale comporte un premier matériau et la partie inférieure comporte un deuxième matériau, le premier matériau présentant une rigidité supérieure à la rigidité du deuxième matériau.

Cette configuration permet une déformation contrôlée du pied milieu lors d'un choc latéral.

L'invention sera davantage détaillée par la description de modes de réalisation non limitatifs, et sur la base des figures annexées illustrant des variantes de l'invention, dans lesquelles :
- [Fig.1] illustre schématiquement un pied milieu vu depuis l'extérieur d'un véhicule automobile selon un mode de réalisation de l'invention ;
- [Fig.2] illustre schématiquement le pied milieu, illustré sur la figure 1, vu depuis l'intérieur du véhicule automobile.

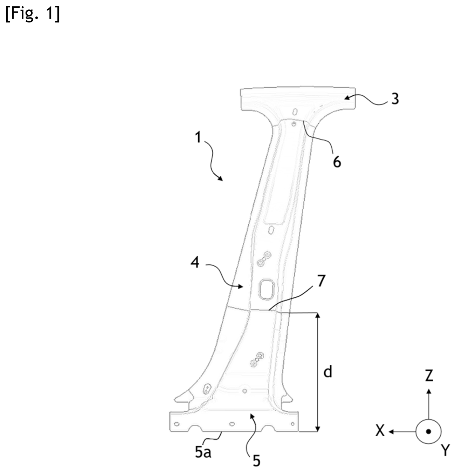

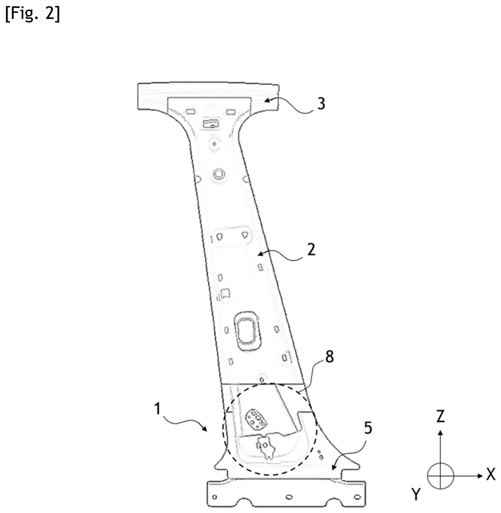

Il est illustré schématiquement, sur la figure 1 et sur la figure 2, un pied milieu, ou montant central d'un véhicule automobile. Le véhicule comporte un train de roulement avant et un train de roulement arrière dont les points de contact avec le sol définissent un plan de base XY défini par une première direction X longitudinale correspondant au roulage en ligne droite, par une deuxième direction Y transversale et orthogonale à la première direction longitudinale X et une troisième direction Z verticale orthogonale à la première direction X et à la deuxième direction Y et est orientée en s'éloignant du sol. Sur la figure 1, le pied milieu est représenté depuis une vue extérieure du véhicule. Le pied milieu est un élément structurel généralement positionné entre la portière avant et la portière arrière du véhicule. Classiquement, le pied milieu comporte un renfort 1 et une doublure 2. Le renfort 1 est un élément structurel, pouvant comporter un matériau métallique, situé à l'intérieur du pied milieu. Le renfort 1 contribue à renforcer la rigidité de la carrosserie et à absorber les chocs latéraux en cas de collision, protégeant ainsi les occupants du véhicule. Le renfort 1 est positionné en regard de l'extérieur dudit véhicule. La doublure 2 est une couche supplémentaire, parfois utilisée pour recouvrir ou compléter la structure du pied milieu. Elle peut servir de support au revêtement intérieur, offrir une finition esthétique ou contribuer à l'isolation acoustique et thermique. La doublure 2 est positionnée en regard de l'intérieur du véhicule, c'est-à-dire en regard de l'habitacle. Le véhicule comporte un arceau de pavillon et un châssis comprenant un longeron. L'arceau de pavillon est défini comme étant une pièce structurelle faisant partie de la carrosserie. Il s'agit plus précisément d'une traverse, d'une poutre ou d'un renfort transversal situé sous le toit, ou pavillon, du véhicule. Le pied milieu s'étend verticalement, depuis l'arceau de pavillon jusqu'au longeron, selon la troisième direction Z. En effet, le pied milieu comporte une partie supérieure 3, une partie centrale 4 et une partie inférieure 5. La partie supérieure 3 est fixée à l'arceau de pavillon. La partie inférieure 5 est fixée au longeron. La partie centrale 4 est fixée à la partie supérieure 3 et à la partie inférieure 5 d'autre part. La fixation de la partie supérieure 3 et de la partie centrale 4 est réalisée par une première zone de raboutage 6. De plus, la fixation de la partie centrale 4 et de la partie inférieure 5 est réalisée par une deuxième zone de raboutage 7. Par définition, une zone de raboutage désigne l'endroit précis où deux pièces, de préférence métalliques, sont assemblées ou jointées pour former une structure homogène. La première zone de raboutage 6 et la deuxième zone de raboutage 7 sont des zones de faiblesses car, lors de la survenue d'un choc latéral, il existe un risque de déformer, voire de rupture, du pied milieu au niveau de ces deux zones, notamment de la deuxième zone de raboutage 7 qui sera la plus impactée. Le pied milieu est représenté depuis une vue intérieure du véhicule sur la figure 2. La partie inférieure 5 comporte une zone de non-recouvrement 8, représenté par un cercle en traits discontinus sur la figure 2. La zone de non-recouvrement 8 est effectivement dénuée de doublure 2, de façon à pouvoir implémenter un support destiné au maintien d'un enrouleur à l'intérieur du véhicule, dans l'habitacle. L'enrouleur est un dispositif mécanique utilisé principalement pour permettre le déroulement et l'enroulement d'une ceinture de sécurité. La zone de non-recouvrement 8 est également une zone de faiblesse car l'absence de la doublure 2 fragilise le pied milieu. Cependant, pour optimiser la masse globale du véhicule, il est préférable de ne pas recouvrir ladite zone de non-recouvrement 8. De plus, cela engendrerait des contraintes pour l'agencement du support de l'enrouleur au sein du véhicule. Ainsi, dans l'art antérieur, la deuxième zone de raboutage 7 est localisée au niveau de la zone de non-recouvrement 8. Il y a donc une superposition des zones de faiblesse qui fragilise d'autant plus le pied milieu. Lors d'un choc latéral, le pied milieu est la première barrière diminuant les risques de dommages sur les occupants du véhicule. Or, si le pied milieu cède rapidement, les dispositifs de sécurité du véhicule, tels que les coussins gonflables (ou *airbag* en langue anglaise) par exemple, n'ont pas le temps de s'actionner correctement. Il est donc essentiel de fortifier le pied milieu de façon à éviter la déformation ou la rupture rapide du pied milieu lors de la survenue d'un choc latéral. Ainsi, dans le cadre de l'invention, la deuxième zone de raboutage 7 est positionnée au-dessus de ladite zone de non-recouvrement 8, selon la troisième direction Z. Ainsi, la deuxième zone de raboutage 7 est localisée à un endroit en vis-à-vis duquel la doublure 2 est présente. Ainsi, la superposition des zones de faiblesse est évitée, ce qui solidifie le pied milieu. De préférence, la partie inférieure 5 présente une extrémité inférieure 5a, représenté sur la figure 1. La deuxième zone de raboutage 7 est positionnée à une distance d de ladite extrémité inférieure 5a. La distance d est, de préférence, comprise entre 400 mm et 500 mm. De manière encore plus préférentielle, la distance d est égale à 450 mm. Optionnellement, la partie inférieure 5 présente une première épaisseur inférieure à 1,7 mm, de préférence 1,5 mm. De la même façon, la partie centrale 4 présente optionnellement une deuxième épaisseur inférieure à 1,9 mm. De préférence, la deuxième épaisseur est égale à 1,5 mm. De telles épaisseurs permettent une bonne efficacité du pied milieu, tout en permettant d'alléger la masse du renfort 1. De préférence, la masse du renfort 1 est inférieure à 5,2 kg, qui est la masse courante du renfort 1 selon l'art antérieur. De manière encore plus préférentielle, la masse est comprise entre 4 kg et 4,5 kg, voire ladite masse est égale à 4,3 kg. Ainsi, la masse globale du véhicule est réduite, ce qui permet d'améliorer les performances du véhicule tout en réduisant sa consommation énergétique. De préférence, la partie centrale 4 comporte un premier matériau et la partie inférieure 5 comporte un deuxième matériau. Le premier matériau présente une rigidité supérieure à la rigidité du deuxième matériau. En d'autres termes, le premier matériau est un matériau rigide, tandis que le deuxième matériau est un matériau ductile. La partie centrale 4 du renfort 1 comporte le premier matériau rigide pour garantir la résistance structurelle, limiter la déformation de l'habitacle et assurer le bon fonctionnement des ceintures et des coussins gonflables. La partie inférieure 5, comportant le deuxième matériau ductile, absorbe l'énergie des impacts grâce à une déformation contrôlée, protégeant ainsi les passagers et limitant les intrusions. Cette combinaison optimise la sécurité en équilibrant rigidité et capacité d'absorption.

## Revendications

1. Véhicule automobile comportant un train de roulement avant et un train de roulement arrière dont les points de contact avec le sol définissent un plan de base (XY) défini par une première direction (X) longitudinale correspondant au roulage en ligne droite, par une deuxième direction (Y) transversale et orthogonale à la première direction longitudinale (X) et une troisième direction (Z) verticale orthogonale à la première direction (X) et à la deuxième direction (Y) et est orientée en s'éloignant du sol, ledit véhicule comportant un pied milieu s'étendant selon la troisième direction (Z), un arceau de pavillon et un châssis comprenant un longeron, le pied milieu comportant un renfort (1) positionné en regard de l'extérieur du véhicule et une doublure (2) positionnée en regard de l'intérieur du véhicule selon la deuxième direction (Y), le renfort (1) comportant une partie supérieure (3), une partie centrale (4) et une partie inférieure (5), la partie supérieure (3) étant fixée à l'arceau de pavillon, la partie inférieure (5) étant fixée au longeron, la partie centrale (4) étant fixée à la partie supérieure (3) par une première zone de raboutage (6), la partie centrale (4) étant fixée à la partie inférieure (5) par une deuxième zone de raboutage (7), **caractérisé en ce que** la partie inférieure (5) comporte une zone de non-recouvrement (8) par ladite doublure (2), la deuxième zone de raboutage (7) étant positionnée au-dessus de la zone de non-recouvrement (8) selon la troisième direction (Z).

2. Véhicule selon la revendication 1, **caractérisé en ce que** la partie inférieure (5) présente une extrémité inférieure (5a), ladite deuxième zone de raboutage (7) étant positionnée à une distance (d) comprise entre 400 mm et 500 mm de ladite extrémité inférieure (5a).

3. Véhicule selon la revendication 2, **caractérisé en ce que** la distance (d) est égale à 450 mm.

4. Véhicule selon l'une quelconque des revendications 1 à 3, **caractérisé en ce que** ledit renfort présente une masse inférieure à 5,2 kg.

5. Véhicule selon la revendication 4, **caractérisé en ce que** la masse est comprise entre 4 kg et 4,5 kg.

6. Véhicule selon la revendication 5, **caractérisé en ce que** la masse est égale à 4,3 kg.

7. Véhicule selon l'une quelconque des revendications 1 à 6, **caractérisé en ce que** la partie inférieure (5) présente une première épaisseur inférieure à 1,7 mm, la partie centrale (4) présentant une deuxième épaisseur inférieure à 1,9 mm.

8. Véhicule selon la revendication 7, **caractérisé en ce que** la première épaisseur est égale à 1,5 mm et la deuxième épaisseur est égale à 1,5 mm.

9. Véhicule selon l'une quelconque des revendications 1 à 8, **caractérisé en ce que** la partie centrale (4) comporte un premier matériau et la partie inférieure (5) comporte un deuxième matériau, le premier matériau présentant une rigidité supérieure à la rigidité du deuxième matériau.
